# EUROPÄISCHE PATENTANMELDUNG

(11) **EP 1 808 613 A2**
(43) Veröffentlichungstag der Anmeldung: **18.07.2007**
(21) Anmeldenummer: 06025904.1
(22) Anmeldetag: 14.12.2006
(51) Int. Cl.: F16D 25/08

(54) **Dichtung eines hydraulischen Zentralausrückers**

(30) Priorität: 11.01.2006 DE 102006001470
(71) Anmelder: LuK Lamellen und Kupplungsbau Beteiligungs KG, 77815 Bühl (DE)
(72) Erfinder: Leger, Frédéric, 28140 Terminiers (FR); Sainton, Denis, 45520 Chevilly (FR)

(57) **Zusammenfassung**

Die Erfindung betrifft eine Dichtung (3) eines hydraulischen Zentralausrückers (Z), wobei diese eine Einlage aufweist. Erfindungsgemäß weist die Einlage eine die Verdrehfestigkeit und Festigkeit der Dichtung gewährleistende Form auf.

## Beschreibung

Die Erfindung betrifft eine Dichtung eines hydraulischen Zentralausrückers nach dem Oberbegriff des ersten Patentanspruchs.

Zentralausrücker ("Concentric Slave Cylinder" - CSC) werden in hydraulischen Strecken in der Funktionskette zwischen Kupplungspedal und Kupplung eingesetzt. In einem hydraulischen Zentralausrücker sind unterschiedliche Funktionen, wie z.B. Kupplungsbetätigung, Vorbelastung und Selbstzentrierung integriert.

Zentralausrücker weisen gem. DE 200 22 385 U1 und DE 103 14 864 B3 ein gehäuseförmiges Bauteil auf, in welchem eine Führungshülse integriert ist, auf deren Außendurchmesser ein Ringkolben mit seinem Innendurchmesser geführt wird. Eine Dichtung dichtet zwischen dem Innendurchmesser des gehäuseförmigen Bauteils, dem Außendurchmesser der Führungshülse und einer in Richtung gehäuseförmigem Bauteil weisenden Stirnseite des Ringkolbens ab. Die Führungshülse steht über Lagerelemente mit einer (Wälz-) Lagereinheit in Wirkverbindung mit Kupplungselementen. Die Dichtung ist dabei einer hohen Reibung sowie starkem Verschleiß ausgesetzt. In der FR 2 745 617 wird ein Zentralausrücker beschrieben, welcher eine Dichtung aufweist, in welche ein ringförmiger Einsatz mit einem im Wesentlichen rechteckigen Querschnitt integriert ist. Damit ist jedoch nicht die erforderliche Steifigkeit und Verwindungs- bzw. Verdrehfestigkeit der Dichtung gewährleistet.

Aufgabe der Erfindung ist es, eine Dichtung eines hydraulischen Zentralausrückers zu entwickeln, die eine hohe Steifigkeit und Verdrehfestigkeit aufweist.

Diese Aufgabe wird mit den Merkmalen des ersten Patentanspruchs gelöst. Vorteilhafte Ausbildungen ergeben sich aus den Unteransprüchen.

Die Dichtung des hydraulischen Zentralausrückers ist mit einer Einlage versehen, die erfindungsgemäß eine, die Verdrehfestigkeit und Festigkeit der Dichtung gewährleistende Form besitzt.

Dazu ist die Einlage in Form einer Spirale oder in Form eines umlaufenden sich in radialer und axialer Richtung erstreckenden Bauteils ausgebildet.

Die Spirale ist bevorzugt zylindrisch ausgebildet und sollte mindestens zwei Wicklungen in Form einer ersten Wicklung und einer zweiten Wicklung aufweisen.

Der Durchmesser der Wicklungen des Einsatzes in Form einer Spirale kann gleich oder unterschiedlich sein. Z.B. können die Wicklungen von innen nach außen auf einer zur Längsachse senkrechten Ebene liegen. Dabei liegt vorzugsweise der Außendurchmesser einer innenliegenden Wicklung am Innendurchmesser einer sich anschließenden außen liegenden Wicklung an.

Alternativ ist es möglich, den Einsatz in Form eines umlaufenden, ringförmigen Bauteils auszubilden, wobei das Bauteil mindestens eine in axiale Richtung weisende Ausstülpung aufweist. Dazu kann der Einsatz mit einem U- oder V-förmigen Querschnitt oder einem wellenförmigen Querschnitt versehen sein.
Bevorzugt ist dieses Bauteil als Blechformteil ausgebildet.

Durch die erfindungsgemäße Form der Einlage wird eine äußerst stabile, steife und verdrehsichere sowie verschleißarme Dichtung geschaffen, die den hohen dynamischen Beanspruchungen des Zentralausrückers standhält. Insbesondere wenn die Zentralausrücker aus Kunststoff gefertigt werden, ist diese erhöhte Stabilität der Dichtung von entscheidendem Vorteil und erhöht dessen Lebensdauer.

Die Erfindung wird nachfolgend anhand von Ausführungsbeispielen und zugehörigen Zeichnungen näher erläutert.
Es zeigen:
Fig. 1: einen Längsschnitt durch einen Zentralausrücker,
Fig. 2: einen Längsschnitt der Dichtung mit einer Einlage in Form einer Spirale,
Fig. 3: eine Einzelteildarstellung der Spirale,
Fig. 4: einen Längsschnitt einer Dichtung mit einer Einlage in Form eines Bauteils, welches einen V-förmigen Querschnitt aufweist,
Fig. 5: einen Querschnitt des Bauteils gem. Fig. 4,
Fig. 6: einen Querschnitt des Bauteils mit einem wellenförmigen (W-förmigen) Querschnitt,
Fig. 7: einen Querschnitt des Bauteils mit einem U-förmigen Querschnitt.

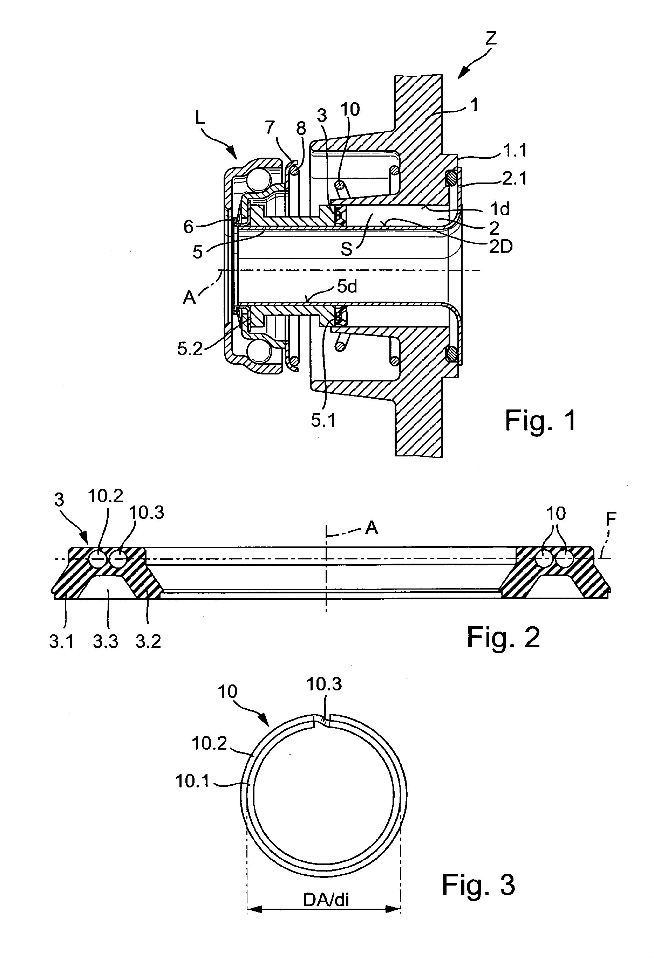

Der Zentralausrücker Z besitzt gem. Fig. 1 eine Längsachse A und weist ein gehäuseförmiges Bauteil 1 auf, an dessen freier Stirnseite 1.1 die Führungshülse 2 mittels eines Ringflansches 2.1 befestigt ist.

Der Innendurchmesser 1d des gehäuseförmigen Bauteils 1 ist vom Außendurchmesser 2D der Führungshülse 2 beabstandet, so dass ein Ringspalt S entsteht. In dem Ringspalt S dichtet eine Dichtung 3 am Innendurchmesser 1d des gehäuseförmigen Bauteils 1 und am Außendurchmesser 2D der Führungshülse 2 ab. Die Dichtung 3 ist über einen Dichtringträger 4 an einem Ringkolben 5 an dessen in Richtung zum gehäuseförmigen Bauteil 1 weisender Stirnseite 5.1 befestigt und dichtet ebenfalls zur Stirnseite 5.1 des Ringkolbens 5 ab. An der der Stirnseite 5.1 des Ringkolbens 5 gegenüberliegenden Stirnseite 5.2 greift ein Ausrücklager A an, welches über ein Blechteil 6 mit dem Ringkolben 5 verbunden ist. Über eine Tellerfeder 7 und eine Vorlastfeder 8 wird eine definierte Vorspannkraft auf das Ausrücklager L aufgebracht. Der Ringkolben 5 und die Führungshülse 2 bestehen bevorzugt aus Kunststoff. In der Dichtung 3 ist ein Einlegeteil angeordnet, welches in Form einer Spirale 10 ausgebildet ist.

Fig. 2: zeigt den Längsschnitt der Dichtung 3 gem. Fig. 1 mit einer Einlage in Form einer Spirale 10. Die Dichtung 3 weist eine äußere Dichtlippe 3.1, eine innere Dichtlippe 3.2 und eine sich dazwischen erstreckende Ausnehmung 3.3 auf. in die Dichtung 3 eingebettet ist eine Spirale 10 mit einer inneren Wicklung 10.1 und einer äußeren Wicklung 10.2. Beide Wicklungen liegen auf einer Ebene E, die rechtwinklig zur Achse A verläuft.

Die Einzelteildarstellung der Spirale 11 in der Vorderansicht zeigt Fig. 3. Der Außendurchmesser DA der inneren Spirale 10.1 und der Innendurchmesser di der äußeren Spirale 10.2 liegen aneinander an. Die innere und die äußere Spirale 10.1 und 10.2 sind über einen radial nach außen gekröpften Bereich 10.3 miteinander verbunden.

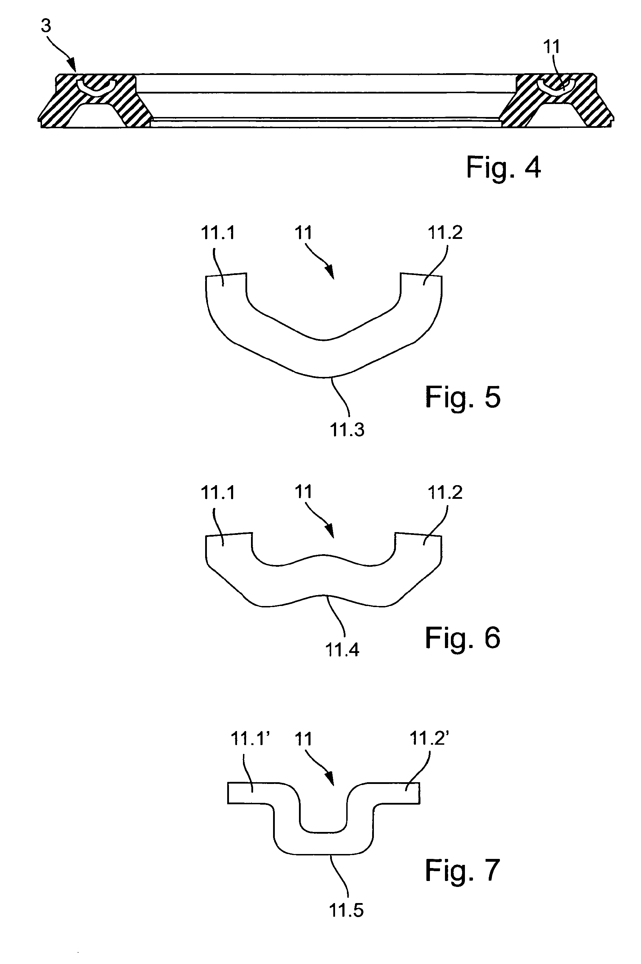

Gem. Fig. 4 ist es auch möglich, anstelle einer Spirale ein Bauteil 11 in Form eines V-förmigen Blechformteils in die Dichtung 3 einzubetten. Den Querschnitt dieses V-förmigen Bauteils 11 zeigt Fig. 5. Zwei Schenkel 11.1 und 11.2 weisen bevorzugt von den Dichtlippen (Fig. 4) weg und erstrecken sich in axialer Richtung. Zwischen den beiden Schenkeln 11.1 und 11.2 erstreckt sich in Richtung zu den Dichtlippen (Fig. 4) ein V-förmig gebogener Bereich 11.3.

Wie in Figur 6 dargestellt ist es auch möglich, zwischen den beiden Schenkeln 11.1 und 11.2 des Bauteils 11 einen wellenförmig (W-förmig) gebogenen Bereich 11.4 vorzusehen.

In Fig. 7 ist ein Bauteil 11 im Querschnitt dargestellt, welches einen sich radial nach außen erstreckenden Schenkel 11.1' und einen sich radial nach innen erstreckenden Schenkel 11.2' aufweist, zwischen welchen sich in axialer Richtung ein U-förmig ausgestülpter Bereich 11.5 erstreckt.

Neben den dargestellten Ausführungsvarianten ist es selbstverständlich auch möglich, eine Spirale mit mehr als zwei Wicklungen einzusetzen. Weiterhin können die Wicklungen der Spirale auch in axialer Richtung hintereinander liegen.

Weiterhin kann das Bauteil andere Formen mit sich radial und axial ersteckenden Bereichen aufweisen.

Durch die erfindungsgemäße Einlage in der Dichtung wird die Festigkeit und Verdrehsicherheit der Gummidichtung um ein vielfaches verbessert. Die Gummidichtung bleibt "formbeständig" und der Abrieb wird verringert. Insgesamt kann dadurch die Lebensdauer des Systems entscheidend erhöht werden.

### Bezugszeichenliste

- 1: gehäuseförmiges Bauteil
- 1.1: Stirnseite des gehäuseförmigen Bauteils
- 1d: Innendurchmesser des gehäuseförmigen Bauteils
- 2: Führungshülse
- 2.1: Flansch der Führungshülse
- 2D: Außendurchmesser der Führungshülse
- 3: Dichtung
- 3.1: äußere Dichtlippe
- 3.2: innere Dichtlippe
- 3.3: Ausnehmung
- 5: Ringkolben
- 5.1: erste Stirnfläche des Ringkolbens
- 5.2: zweite Stirnfläche des Ringkolbens
- 5d: Innendurchmesser des Ringkolbens
- 6: Blechteil
- 7: Tellerfeder
- 8: Vorlastfeder
- 10: Spirale
- 10.1: innere Wicklung
- 10.2: äußere Wicklung
- 10.3: nach außen gekröpfter Bereich zwischen 10.1 und 10.2
- 11: Bauteil
- 11.1, 11.2: sich axial erstreckende Schenkel
- 11.1', 11.2': sich radial erstreckende Schenkel
- 11.3: V-förmig gebogener Bereich
- 11.4: wellenförmig (W-förmig) gebogener Bereich
- 11.5: U-förmig ausgestülpter Bereich
- A: Achse
- L: Ausrücklager
- E: Ebene
- S: Ringspalt
- Z: Zentralausrücker

## Patentansprüche

1. Dichtung eines hydraulischen Zentralausrückers (Z) mit einer Längsachse (A), wobei die Dichtung (3) eine Einlage aufweist, **dadurch gekennzeichnet, dass** die Einlage eine die Verdrehfestigkeit und Festigkeit der Dichtung gewährleistende Form besitzt.

2. Dichtung nach Anspruch 1, **dadurch gekennzeichnet, dass** die Einlage in Form einer Spirale (10) oder in Form eines umlaufenden sich in radialer und axialer Richtung erstreckenden Bauteils (11) ausgebildet ist.

3. Dichtung nach Anspruch 2, **dadurch gekennzeichnet, dass** die Spirale (10) zylindrisch ausgebildet ist.

4. Dichtung nach Anspruch 2, **dadurch gekennzeichnet, dass** die Spirale (10) mindestens zwei Wicklungen aufweist.

5. Dichtung nach Anspruch 4, **dadurch gekennzeichnet, dass** der Durchmesser der Wicklungen der Spirale (10) gleich oder unterschiedlich ist.

6. Dichtung nach Anspruch 3 oder 4, **dadurch gekennzeichnet, dass** die Wicklungen der Spirale (10) von innen nach außen auf einer zur Längsachse (A) senkrechten Ebene liegen.

7. Dichtung nach Anspruch 5, **dadurch gekennzeichnet, dass** der Außendurchmesser einer innenliegenden Wicklung am Innendurchmesser der sich anschließenden außenliegenden Wicklung anliegt.

8. Dichtung nach Anspruch 2, **dadurch gekennzeichnet, dass** das Bauteil (11) ringförmig ausgebildet ist und mindestens eine in axiale Richtung weisende Ausstülpung aufweist.

9. Dichtung nach Anspruch 8, **dadurch gekennzeichnet, dass** das Bauteil (11) einen U-oder V-förmigen Querschnitt aufweist.

10. Dichtung nach Anspruch 8, **dadurch gekennzeichnet, dass** das Bauteil (11) einen wellenförmigen Querschnitt aufweist.

11. Dichtung nach Anspruch 2 , **dadurch gekennzeichnet, dass** das Bauteil (11) als Blechformteil ausgebildet ist.
